# EUROPEAN PATENT APPLICATION

(11) **EP 3 460 966 A1**
(43) Date of publication of application: **27.03.2019**
(21) Application number: 18187110.4
(22) Date of filing: 02.08.2018
(51) Int. Cl.: H02K 21/02, H02K 1/14

(54) **PERMANENT MAGNET ELECTRICAL MACHINE**

(30) Priority: 26.09.2017 GB 201715540
(71) Applicant: Rolls-Royce plc, London SW1E 6AT (GB)
(72) Inventor: Chong, Ellis, Derby, Derbyshire DE24 8BJ (GB); Jewell, Geraint, Derby, Derbyshire DE24 8BJ (GB)
(74) Representative: Rolls-Royce plc

(57) **Abstract**

A permanent magnet electrical machine has a rotor supporting a circumferential row of permanent magnets. The electrical machine further has a stator coaxial with the rotor and having a circumferential row of stator teeth carrying respective coil windings. The teeth provide paths for magnetic flux produced by the magnets, thereby electromagnetically linking the magnets and the coils when the rotor rotates relative to the stator. The teeth have respective core portions on which the coil windings are mounted, and respective tip portions located between the core portions and the rotor. The tip portions are controllably rotatable between a first position in which the tip portion and the core portion of each tooth are angularly aligned to enhance magnetic flux linkage between the magnets and the coils, and a second position in which the tip portion of each tooth is rotated out of angular alignment with its core portion to reduce magnetic flux linkage between the magnets and the coils. The tip portions are biased to the second position.

## Description

### Field of the Present Disclosure

The present disclosure relates to a permanent magnet electrical machine.

### Background

Permanent magnet (PM) electrical machines can provide very high power and torque densities and are thus attractive options for a number of aerospace power generation and motor (e.g. pumping and actuation) applications. However, especially in generation applications, the permanency of the excitation provided by the permanent magnets can be a drawback. In particular, in some circumstances it may be necessary to turn off the excitation, notably under conditions in which the machine has a hazardous fault (e.g. a single turn electrical short-circuit within a coil winding). One option would be to turn off the power source driving the generator, but evidently this may not be realistic when that power source is a main engine. Thus to address the problem other solutions have been proposed, including:
- Adoption of so-called fault-tolerant machine design, in which the machine is designed to be able to operate safely with a sub-set of possible fault scenarios. However, as such designs may not be capable of accommodating faults outside the sub-set, they offer at best only a partial solution.
- Incorporation of a mechanical disconnect mechanism in the drive-train to the generator. This removes the mechanical input to the generator, but typically adds cost, weight and complexity.

### Summary

The electrical machine of the present disclosure addresses the problem in a different manner, namely by diverting magnetic flux away from stator core regions that link with stator coil windings in the event of a detected fault, and thereby removing the induced voltage in the stator windings which is the source of damaging short-circuit currents.

Accordingly, in a first aspect, the present disclosure provides a permanent magnet electrical machine having:
an axis;
a rotor rotating about the axis and supporting a circumferential row of permanent magnets;
a stator coaxial with the rotor and the axis, the stator having a circumferential row of stator teeth carrying respective coil windings, the teeth providing paths for magnetic flux produced by the magnets, thereby electromagnetically linking the magnets and the coils when the rotor rotates relative to the stator;
wherein the teeth have respective core portions on which the coil windings are mounted, and respective tip portions located between the core portions and the rotor, the circumferential row of tip portions being controllably rotatable about the axis between a first position in which the tip portion and the core portion of each tooth are angularly aligned to enhance magnetic flux linkage between the magnets and the coils, and a second position in which the tip portion of each tooth is rotated out of angular alignment with its core portion to reduce magnetic flux linkage between the magnets and the coils.

The rotatable tip portions can have a minimal impact on electromagnetic performance, and do not necessarily increase the overall volume or mass of the electrical machine. Moreover they can be fast acting with almost immediate elimination of fault currents, and no mechanical interaction with the spinning rotor is required.

The electrical machine may operate as a generator and/or as a motor.

In a second aspect, the present disclosure provides a gas turbine engine having an electrical machine according to the first aspect. For example, the machine may operate as a generator powered by the gas turbine engine (e.g. by taking off power from a shaft of the engine), or as a motor powering an engine system (e.g. as a fuel pump of the engine fuel system, an oil pump of the engine oil system, or as an actuator adjusting variable geometry components of the engine).

Further optional features of the present disclosure will now be set out. These are applicable singly or in any combination with any aspect of the present disclosure.

The tip portions may be biased to the second position. Conveniently, the tip portions may be spring biased to the second position.

By biasing the tip portions to the second position the machine can provide a fail-safe mode of operation. In particular, if an actuator responsible for rotating the tip portions and actively maintaining the tip portions in the first position were to fail, the bias can operate to automatically rotate the tip portions to the second position and thus reduce the magnetic flux linkage between the magnets and the coils.

The tip portions may slidingly engage with the core portions on rotating to the first position. In general it is advantageous for the tip portions to make intimate contact with the core portions in the first position in order to enhance the magnetic flux linkage between the magnets and the coils. The tip portions and the core portions may have respective mating surfaces which prevent rotation of the tip portions beyond the first position when the tip portions slidingly engage with the core portions on rotating to the first position. As well as preventing over-rotation, the mating surfaces can also assist with torque transmission between the tip portions and the core portions, although typically only in one direction (and thus consistent with just generator or motor use of the machine).

In the second position, first gaps may open to space the tip portions from the core portions. By opening up these gaps, the reduction in magnetic flux linkage between the magnets and the coils can be improved.

In the second position, each tip portion may be located angularly midway between neighbouring core portions. In general, locating each tip portion at this midway location helps to maximise the reduction in magnetic flux linkage between the magnets and the coils.

The teeth may further have respective stationary portions, the stationary portions being fixed relative to the core portions, and the tip portions being slidably movable over the stationary portions when rotating between the first and second positions. With such an arrangement, second gaps may be provided between neighbouring stationary portions to circumferentially space the teeth from each other when the tip portions are in the first position. Moreover, when the tip portions move to the second position, the tip portions can bridge the second gaps to form a ring-shaped preferential magnetic flux path around the rotor. On a transverse cross-section through the machine, the stationary portions may be substantially rectangular in shape.

The stationary portions may be located radially between the tip portions and the core portions. Alternatively the stationary portions may be located radially between the tip portions and the rotor. Advantageously, this ring-shaped preferential magnetic flux path bypasses the core portions, and thus further helps to reduce in magnetic flux linkage between the magnets and the coils.

Each tip portion may have a coil-side surface and a radially spaced rotor-side surface, the tip portion expanding in angular extent with radial distance from the coil-side surface to the rotor-side surface. Thus on a transverse cross-section through the machine, the tip portions may be substantially trapezoidal in shape.

The electrical machine may further have an actuator to controllably rotate the tip portions between the first and second positions. The actuator can then configured to provide a fail-safe mode which allows the tip portions to rotate under action of the bias to the second position when the actuator is de-activated. The actuator can configured to variably locate the tip portions at any position between the first and second positions, or the actuator can be configured to locate the tip portions at just the first and second positions.

### Brief Description of the Drawings

Embodiments of the present disclosure will now be described by way of example with reference to the accompanying drawings in which:
Figure 1 shows a longitudinal cross-section through a ducted fan gas turbine engine;
Figure 2A shows schematically a transverse cross-section through a permanent magnet electrical machine having tip portions of its stator teeth in a first rotation position;
Figure 2AB shows schematically a transverse cross-section through the permanent magnet electrical machine of Figure 2A with the tip portions in a second rotation position;
Figure 3A shows a finite element analysis prediction of magnetic field distribution for the electrical machine of Figure 2A with the tip portions in the first position;
Figure 3B shows a finite element analysis prediction of magnetic field distribution for the electrical machine of Figure 2B with the tip portions in the second position;
Figure 4 shows a close up view of portions of one tooth of the electrical machine of Figures 2 and 3, with the tip portion in the second position;
Figure 5A shows a schematic cross-section through three teeth with the tip portions in the first position;
Figure 5B shows a schematic cross-section through three teeth with the tip portions in the second position; and
Figure 6 shows a schematic cross-section through three teeth with stationary portions between the core portions and the tip portions, with the tip portions in the second position.

### Detailed Description and Further Optional Features

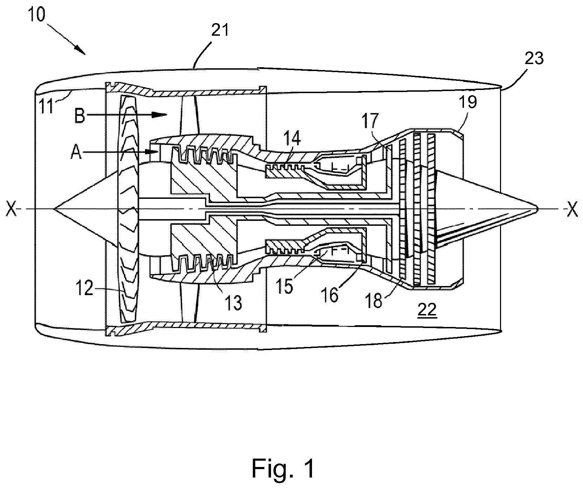

With reference to Figure 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The gas turbine engine has one or more permanent magnet electrical machines. For example, the electrical machine may operate as a generator powered by one of the above-mentioned interconnecting shafts, or as a motor powering e.g. a pump of the engine's fuel or oil system or an actuator(s) which adjust variable vanes of the engine.

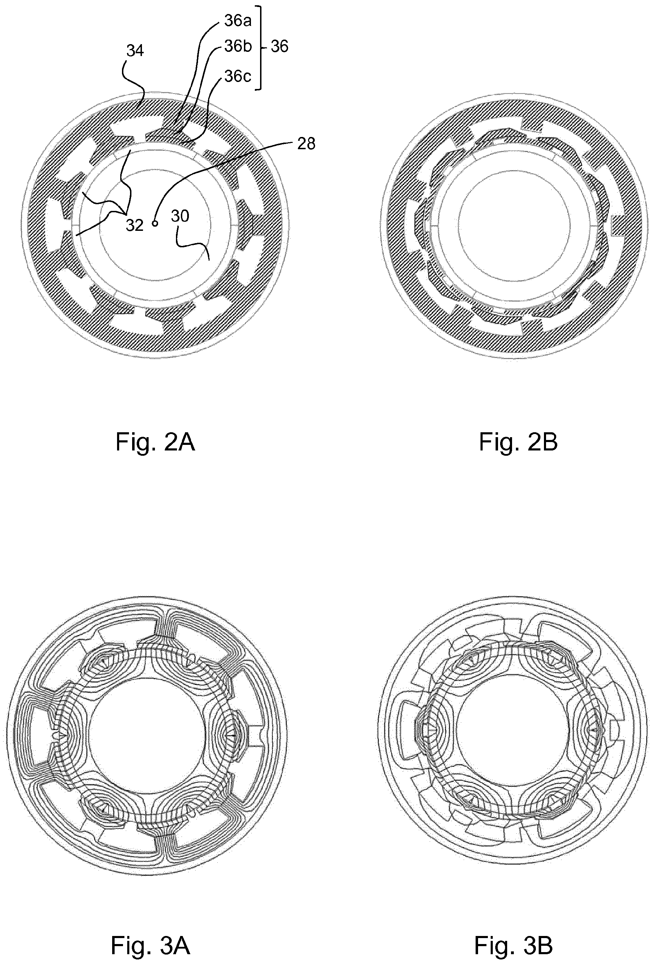

The permanent magnet electrical machine is shown schematically in transverse cross-section in Figure 2A. The machine has an inner rotor 30 supporting a circumferential row of permanent magnets 32 (six as shown in Figure 2A). The rotor 30 rotates about an axis 28. The machine also has a coaxial outer stator 34 which provides a circumferential row of stator teeth 36 (nine as shown in Figure 2A) around which are wound respective coil windings (not shown in Figure 2A). The teeth provide paths for magnetic flux produced by the magnets, thereby electromagnetically linking the magnets and the coils when the rotor rotates relative to the stator.

Each stator tooth 36 is formed from a number of different components, namely a core portion 36a which is stationary and on which the respective coil winding is mounted, and a tip portion 36b radially inwards from the core portion. There may also be a further stationary portion 36c, radially inwards from the tip portion as shown in Figure 2. The tip portions of the teeth are rotatable between a first position shown in Figure 2A in which they are angularly aligned with their respective core portions, and a second position shown in Figure 2B in which they are rotated out of angular alignment, typically by a half a tooth pitch to a point midway between neighbouring core portions.

The tip portions 36b and the further stationary portions 36c can take different shapes and forms. However, typically, the tip portions are curved trapezoidal in shape on the transverse cross-section such that they spread out in angular extent towards the rotor. The further stationary portions may be curved rectangular in shape, e.g. having the same angular extent as the maximum angular spread of the tip portions.

In the first position shown in Figure 2A, the portions 36a-c of each tooth 36 are in an aligned stack with the tip portion 36b sandwiched between, and making physical contact with, the core portion 36a, and the further stationary portion 36c. Although the further stationary portions and tip portions have a wider angular extent than the core portions, spacings between adjacent teeth are preserved by gaps between neighbouring stationary portions and gaps between neighbouring tip portions.

In the second position shown in Figure 2B, the rotation of the tip portions 36b causes them to slidingly disengage from the core portions 36a such that further gaps are opened up between the tip portions and the core portions. Moreover, the angular extent of the tip portions can be such that in the second position they bridge the gaps between neighbouring stationary portions 36c. This forms a ring-shaped preferential magnetic flux path around the rotor 30.

Figure 3A shows finite element analysis predictions of magnetic field distribution for the 9 slot, 6-pole electrical machine of Figures 2A and B when the tip portion 36b are in the first position, and Figure 3B shows finite element analysis predictions of magnetic field distribution for the electrical machine when the tip portion 36b are in the second position. A 160 mm rotor bore was modelled in the analyses. In the first position, the alignment of the portions 36a-c of the teeth 36 enhances magnetic flux linkage between the magnets 32 and the coils windings. By contrast, in the second position the rotation of the tip portion 36b out of alignment, and particularly the opening up of gaps between the tip portions and the core portions 36a combined with the production of the ring-shaped preferential magnetic flux path around the rotor 30 substantially reduces the magnetic flux linkage with the coils windings (to about 10% of the normal level) by displacing ("shorting") most of the flux into the ring-shaped preferential path. This rapidly reduces any electrical currents flowing in the stator by removing a significant proportion of induced emf in the coil windings. The tip portions 36b and stationary portions 36c are appropriately shaped and dimensioned to carry the displaced flux without excessive magnetic saturation.

The 9 slot, 6-pole electrical machine of Figures 2 and 3 has 1.5 slots per pole, which provides a high ratio of tooth width to magnet pole width, and thus a large proportion of the magnet flux can be displaced to the ring-shaped preferential path through a single tip portion 36b

To improve the robustness of the electrical machine to system faults, the tip portions 36b can be biased, e.g. by a spring mechanism, to the second position. The tip portions are thus actively actuated to rotate them into the first position for normal operation against the action of the bias. In the event of a detected fault, the excitation to the actuation mechanism can be removed and the tip portions return, under the action of the bias, to safe second position. Advantageously, this type of arrangement can rapidly and automatically reduce any currents flowing in the stator, thus providing a fail-safe mode of operation in the event of a fault in the actuation mechanism or its electronics and control system. In addition, no mechanical interaction with the spinning rotor 30 is required.

The actuation mechanism can be, for example, a highly geared ring driven by a small motor, or a direct limited stroke rotary actuator. To ease the burden on the actuation mechanism, the angle of rotation between the first and second positions can be reduced. This favours stators with a larger number of teeth. For example, the stator may have 36, 48 or 72 slots, even for pole numbers as low as 2, 4 or 6. A 72 slot stator would require a rotation of only 2.5°.

As well as the advantages pointed out above, the electrical machine requires little, or no, increase in overall casing volume or machine mass (other than for the actuation mechanism).

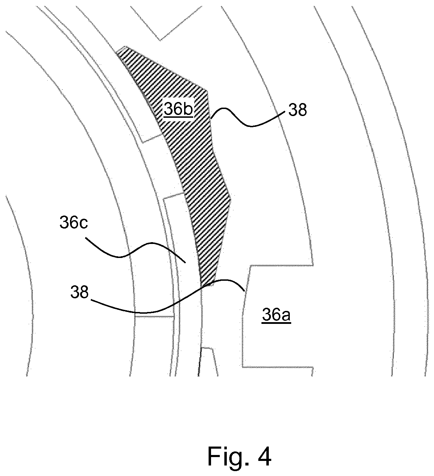

Figure 4 shows a close up view of one tip portion 36b and its core portion 36a and stationary portion 36c, with the tip portion in the second position. The tip portion and the core portion can have mating surfaces 38 which are angled from the circumferential direction and which thus prevent rotation of the tip portion beyond the first position when the tip portion slidingly engages with the core portion on rotating to the first position. In addition, the mating surfaces aid with torque transmission in the machine (although only in one direction).

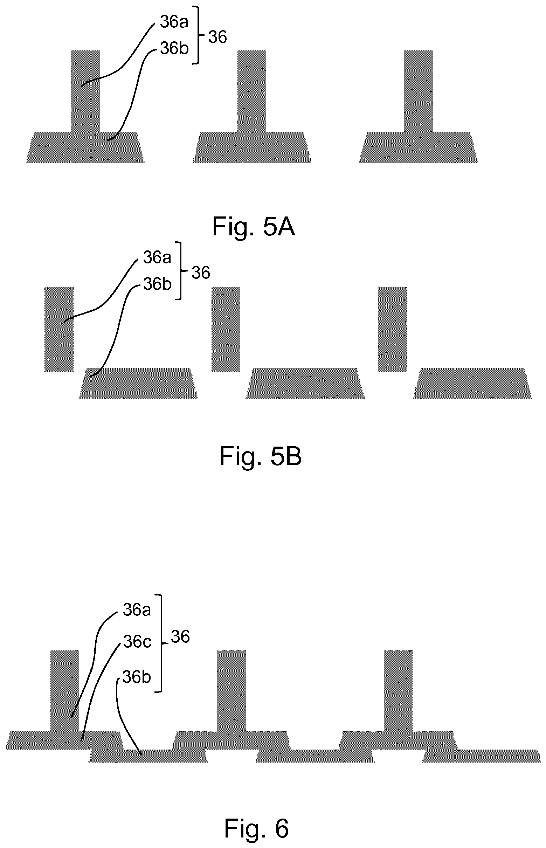

Figures 5A and 5B show a simpler embodiment of the electrical machine in which each tooth comprises a core portion 36a and a tip portion 36b only. Figure 5 is a schematic representation of part of the array of stator teeth; it should be understood that the teeth would be arranged as a circumferential array around the axis and the rotor 32 as illustrated in Figure 2. In Figure 5A the tip portions 36b are radially aligned with their respective core portions 36a, in the first position. In Figure 5B the tip portions 36b are rotated out of alignment, in the second position.

In Figure 6 there is a further stationary portion 36c which is located radially between the tip portions 36b and core portions 36a. In some implementations the stationary portion 36c may be integral with the core portion 36a; that is the core portion 36a includes a section adjacent the tip portion 36b which has wider circumferential extent. In Figure 6 the tip portion 36b is rotated out of radial alignment with the stationary portion 36c and core portion 36a, in the second position.

Although described above in the context of a two position operational mode which accommodate fault conditions, the rotatable tip portions 36b may be used as a field weakening mechanism in a continuous or stepped mode (i.e. by rotating the tip portions to positions between the first and second positions) to reduce magnet flux linkage with the coils windings. This can help to reduce losses at high speeds and to accommodate over-voltage conditions. It can also be used to reduce converter power ratings.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A permanent magnet electrical machine having:
an axis (28);
a rotor (30) rotating about the axis and supporting a circumferential row of permanent magnets (32);
a stator (34) coaxial with the rotor and the axis, the stator having a circumferential row of stator teeth (36) carrying respective coil windings, the teeth providing paths for magnetic flux produced by the magnets, thereby electromagnetically linking the magnets and the coils when the rotor rotates relative to the stator;
wherein the teeth have respective core portions (36a) on which the coil windings are mounted, and respective tip portions (36b) located between the core portions and the rotor, the circumferential row of tip portions being controllably rotatable about the axis between a first position in which the tip portion and the core portion of each tooth are angularly aligned to enhance magnetic flux linkage between the magnets and the coils, and a second position in which the tip portion of each tooth is rotated out of angular alignment with its core portion to reduce magnetic flux linkage between the magnets and the coils.

2. An electrical machine according to claim 1, wherein the tip portions are biased to the second position.

3. An electrical machine according to claim 2, wherein the tip portions are spring biased to the second position.

4. An electrical machine according to any preceding claim, wherein the tip portions slidingly engage with the core portions on rotating to the first position.

5. An electrical machine according to claim 4, wherein the tip portions and the core portions have respective mating surfaces (38) which prevent rotation of the tip portions beyond the first position when the tip portions slidingly engage with the core portions on rotating to the first position.

6. An electrical machine according to any one of the previous claims, wherein, in the second position, first gaps open to space the tip portions from the core portions.

7. An electrical machine according to any one of the previous claims, wherein, in the second position each tip portion is located angularly midway between neighbouring core portions.

8. An electrical machine according to any one of the previous claims, wherein each tip portion has a coil-side surface and a radially spaced rotor-side surface, the tip portion expanding in angular extent with radial distance from the coil-side surface to the rotor-side surface.

9. An electrical machine according to any one of the previous claims, further having an actuator to controllably rotate the tip portions between the first and second positions, the actuator being configured to provide a fail-safe mode which allows the tip portions to rotate under action of the bias to the second position when the actuator is de-activated.

10. An electrical machine according to any one claims 1 to 9, wherein the teeth each have a respective stationary portion (36c), the stationary portions being fixed relative to the core portions, and the tip portions being slidably movable over the stationary portions when rotating between the first and second positions;
wherein second gaps are provided between neighbouring stationary portions to circumferentially space the teeth from each other when the tip portions are in the first position; and
wherein when the tip portions move to the second position, the tip portions bridge the second gaps to form a ring-shaped preferential magnetic flux path around the rotor.

11. An electrical machine according to claim 10, wherein the stationary portions (36c) are located between the tip portions and the core portions.

12. An electrical machine according to claim 10, wherein the stationary portions (36c) are located between the tip portions and the rotor.

13. An electrical machine according to any of claims 10 to 12, wherein, on a transverse cross-section through the machine, the stationary portions are substantially rectangular in shape.

14. A gas turbine engine (10) having an electrical machine according to any one of the previous claims.
